# EUROPEAN PATENT APPLICATION

(11) **EP 1 408 633 A1**
(43) Date of publication of application: **14.04.2004**
(21) Application number: 02257034.5
(22) Date of filing: 10.10.2002
(51) Int. Cl.: H04B 10/17

(54) **Apparatus and method for regeneration of optical pulses**

(71) Applicant: Corning Incorporated, Corning, New York 14831 (US)
(72) Inventor: Maxwell, Graeme Douglas, Ipswich, Suffolk IP4 4LH (GB); Ellis, Andrew David, Bandon, Co. Cork (IE); Manning, Robert John, Ipswich, Suffolk IP1 6RB (GB)
(74) Representative: Poole, Michael John

(57) **Abstract**

Optical pulse signals are regenerated in the optical layer using a source of light at a different optical wavelength from the input data signal, combined with input data signals and supplied to a Mach Zehnder interferometer with a semiconductor optical amplifier in each of its limbs. A delay for producing a time difference in the arrival of incoming data pulses at the respective semiconductor optical amplifiers enables a pulse to be established at one of the outputs of the interferometer by alternate switching of the light at the different optical wavelength on arrival of a data pulse at each of the semiconductor optical amplifiers in turn.

A wavelength-selective wavelength-division multiplexer, preferably an unbalanced Mach Zehnder interferometer, is used to combine the data with the light from the source, avoiding the minimum 3dB loss of a Y-branch coupler and simultaneously removing much of the noise generated by an amplifier that is usually located at the data-signal entry of the regenerator.

For 3R regeneration, the source provides synchronised clock pulses, rather than continuous wave, at the different wavelength

## Description

This invention relates to the regeneration of optical pulses, primarily for use in optical communications.

Long distance communications are now to a large extent effected by digital optical signals carried on optical fibres. Such signals are launched from the transmitter as individual "bell-shaped" pulses which are from a practical point of view good approximations to the ideal rectangular pulses with steep rise and fall of optical intensity and flat intensity maxima (return-to-zero or RZ format), or alternatively with radiation remaining at its peak amplitude between adjacent "on" pulses (non-return-to-zero or NRZ format).

However, in the course of transmission the signals are liable to degradation from a variety of causes, including (but not limited to) absorption, chromatic dispersion and polarisation mode dispersion, cross-talk, accidental partial reflections, optical noise (typically arising in amplifiers) and self-phase and cross-phase modulation, which may reduce amplitude, increase rise and fall times, often unequally, alter rise and fall profiles, disturb pulse spacing and possibly cause pulses to overlap, and in extreme risk that they become indistinguishable (such degradation is sometimes referred to as "eye closure" because it is best observed by superimposing pulses, and their "absences" ordinarily representing "0" digits, on an oscilloscope, resulting in an image bearing some resemblance to an eye); so if the number of bit errors at the receiver is not to become unacceptable, they need to be restored at least approximately to their original form or else converted to a consistent and acceptable but different form: both options are included in the term "regenerated".

In current telecommunications practice, for bit rates up to 10GHz, regeneration is effected by converting the signal from optical to electrical form, regenerating electrically and using the regenerated electrical signal to modulate a new optical signal; but it is thought that it will (perhaps with the projected introduction of a 40GHz bit rate) become technically feasible and cost-effective to regenerate "in the optical layer", that is without intermediate conversion to an electrical signal.

Partial regeneration, referred to in the industry as "2R" regeneration, involves amplification (which is liable to introduce noise) and pulse reshaping (which should eliminate some kinds of noise) and may be sufficient in some circumstances; full ("3R") regeneration also requires re-timing by means of a clock that is synchronised with the average timing of the incoming pulses.

A favoured technique for 2R regeneration in the optical layer utilises a Mach-Zehnder interferometer with a semiconductor optical amplifier (SOA) in each of its two branches. The incoming signal (usually after pre-amplification with a doped-fibre amplifier or perhaps another SOA) is split and supplied to both limbs of the interferometer with a chosen relative delay to one of them, and a continuous wave at a different wavelength is also injected to both limbs. The SOA's in these limbs are operated in saturation, so that an incoming signal pulse (of sufficient magnitude) depletes the carrier concentration in the SOA to the extent that a consequent change in effective refractive index produces a phase change of n in the continuous wave. The effect of this is that the output (at the continuous-wave wavelength) switches from the port (port A) at which it was found in the absence of an input signal and appears on the opposite output port (port B). Similarly, when the delayed copy of the same pulse reaches the SOA in the other limb of the interferometer, it produces a phase change of n and the output switches back to port A. In this way a regenerated pulse is established at port B: its height is determined by the intensity of the injected continuous wave, its rise profile by the rise of the incoming pulse and/or the inherent response characteristic of the SOA, its fall profile also by the rise of the incoming pulse and/or the inherent response characteristic of the (other) SOA, and its length solely by the chosen length of delay between the signal inputs to the two limbs.

This technique can be modified for 3R regeneration by splitting off a fraction of the amplified data input signal for the purpose of clock synchronisation and using the synchronised clock signal to modulate the injected continuous wave so that it reaches the interferometer in the form of a continuous stream of timed pulses, which are combined with the remaining part of the signal and supplied to the interferometer as before.

Hitherto, it has been assumed that the continuous wave or clock pulses (as the case may be) should be combined with the remaining data input signal by means of a Y-branch coupler, despite the fact that this necessarily involves substantial loss of amplitude (at least 3dB or 50% in the case of a single-mode 50:50 coupler), necessitating additional amplification and the degradation associated with it and despite the fact that wavelength-selective multiplexers with much lower losses are known and used to combine optical signals in other contexts - Kato et al, IEE Journal of Selected Topics in Quantum Electronics, vol 6 No. 1 (January/February 2000) pages4-13, "PLC Hybrid Integration Technology and its Application to Photonic Components" provides (Figure 17) an example of the use of a Mach Zehnder interferometer as a coupler in a wavelength converter that might be considered a 2R regenerator.

The present invention is based on the realisation that the use of a wavelength-selective multiplexer has special advantages in the preferred kind of regenerator described above, and so provides apparatus (and a method) for regeneration in which coupling losses are greatly reduced, and which also offers the possibility of substantially improved signal-to-noise ratio.
The apparatus in accordance with the invention comprises:
a source of light at a different optical wavelength from the intended input data signal;
at least one coupler for combining input data signal with said light;
a Mach Zehnder interferometer with a semiconductor optical amplifier in each of its limbs for receiving the combined signal;
a delay for producing a time difference in the arrival of incoming data pulses at the respective semiconductor optical amplifiers so that a pulse will be established at one of the outputs of the interferometer by alternate switching of the light at the said different optical wavelength on arrival of a data pulse at each of the SOAs in turn;
and is *characterised in that* the said coupler, or each of them, is a wavelength-selective wavelength-division multiplexer.

The method of the invention is *characterised* by using a wavelength-selective wavelength division multiplexer to combine input data signal with light of a different optical wavelength.

The wavelength-selective wavelength-division multiplexer is preferably an unbalanced Mach Zehnder interferometer. Other options include ring resonators, grating-assisted couplers, and arrayed-waveguide gratings.

A 3R regenerator in accordance with the invention will include a clock pulse generator for generating optical clock pulses at the said different optical wavelength and a splitter for obtaining a fraction of the amplified data input signal and communicating it to the clock pulse generator for the purpose of synchronisation. Usually the clock pulse generator will be a modulator controlled by an electrical clock and acting on continuous wave light from a separate source, but the use of a pulsed light source, if sufficiently controlled, is not excluded. In this case, it is the clock pulses that will be combined with input data signal (less the fraction used for clock synchronisation) by the wavelength division multiplexer.

Preferably a second wavelength-selective wavelength-division multiplexer is used to separate the regenerated signal from residual light at the data input wavelength; preferably this is also of the Mach Zehnder type, in which case it may also act as a comb filter for removing part of the amplified spontaneous emission from the semiconductor optical amplifier-modulator. This wavelength-selective multiplexer eliminates the need for a separate filter to block the data input wavelength, partly compensating the probable increased length of the apparatus.

Fine tuning of operating wavelength can generally be achieved by heating or cooling appropriate parts, or the whole, of the wavelength-selective multiplexer. In the case of a Mach Zehnder multiplexer, preferably at least one of its branches is provided with a heater (or cooler); in some cases it may be sufficient for its overall temperature to be controlled, but preferably the temperatures of the branches can be individually set.

It should be noted that the spectral bandwidth of the multiplexer (or each of them) needs to be large enough to accommodate the spectral content of the shortest pulse the apparatus is designed to process: this is a matter of routine design and need not be further described.

The invention will be further described, by way of example, with reference to the accompanying drawings in which:
Figure 1 is a diagrammatic representation of a generalised 3R regenerator, partly as a basis for comparison;
Figure 2 is a diagram of a characteristic part of a 3R regenerator in accordance with the invention; and
Figure 3 is a graph showing the transmittances of a particular unbalanced Mach Zehnder multiplexer as a function optical wavelength.

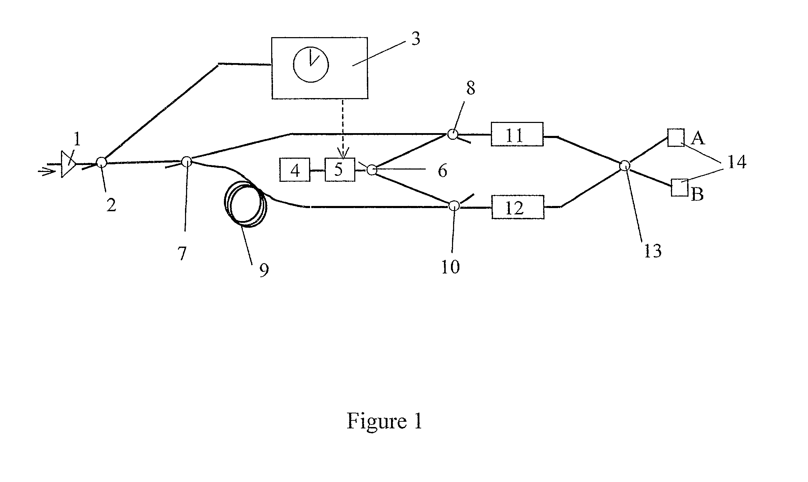

As represented in Figure 1, an incoming optical data signal needing regeneration is first amplified by (say) an erbium-doped fibre amplifier 1 and is then divided by a splitter 2 (say for example a 90:10 splitter) and a minor part sent as a synchronisation signal to a clock 3. A laser 4 or other suitable light source provides continuous-wave light at a wavelength suitable for optical data transmission, but different from the optical wavelength of the incoming data signal, and this is modulated according to electrical signals from the clock 3 to provide optical clock pulses to a further 50:50 splitter 6. The major part of the data signal from the splitter 2 is further divided by a 50:50 splitter 7; half of it is passed directly to a coupler 8 and the other half *via* a delay 9 to another coupler 10; these couplers each receive also respective halves of the clock pulses from splitter 6 and multiplex them with the data signals. The multiplexed signals pass to respective semiconductor optical amplifiers 11 and 12, which operate at saturation as described above to generate an optical phase shift of n in the clock pulse when a data pulse is present. The outputs of the two semiconductor optical amplifiers are brought together in a coupler 13 where they interfere as in any Mach Zehnder interferometer to produce a signal at the optical frequency of the clock pulses on one of the outputs 14, either on A or B or part on each, depending on the relative phases. If the balance of the limbs is such that the output is at A in the absence of any data signal, then it switches to B when a data pulse enters semiconductor optical amplifier 11 and switches back to A when the delayed part of the same pulse reaches semiconductor optical amplifier 12, so establishing a desired regenerated pulse at B.

In known implementations of this type of regenerator, the couplers 8 and 10 are so-called Y-couplers, which (in single-mode waveguides) are in fact 4-port devices with one redundant port at which about half the signal energy is lost, so that the least possible loss in such coupler is about 3dB. Note also that a filter (not shown) is needed at the outlet 14B to stop unregenerated pulses at the original optical wavelength from propagating with the regenerated signal at the new wavelength.

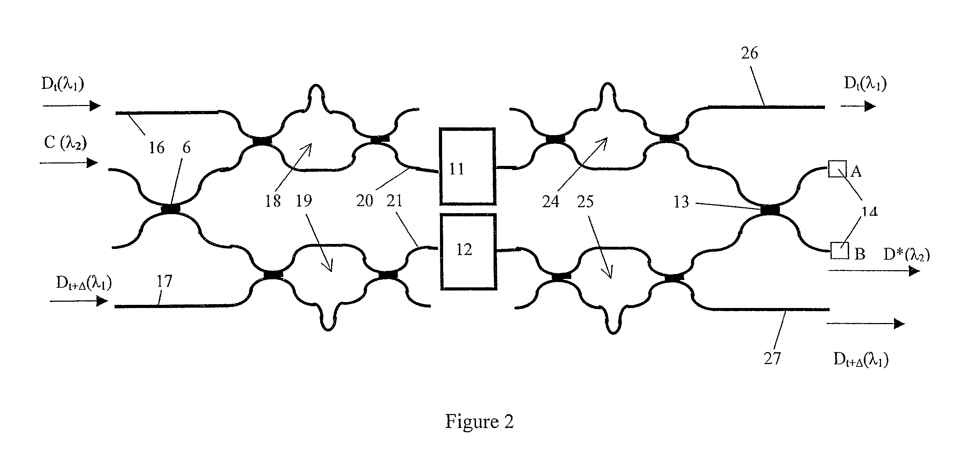

Figure 2 corresponds to the right-hand part of Figure 1, and the same reference numerals have been used for those parts that are unchanged. The operation is on the same underlying basis, with incoming data signal (Dₜ) at a first wavelength λ₁ entering at 16 and its delayed counterpart (D_{t+Δ}) at the same wavelength at 17 while continuous wave (for 2R regeneration) or clock pulses (for 3R regeneration) at a second optical wavelength λ₂ enter at the splitter 6. Instead of Y-branch couplers, the λ₂ light is combined with the respective λ₁ data signals by two unbalanced Mach Zehnder interferometers 18 and 19 acting as wavelength-selective wavelength-division multiplexers and so set up and adjusted that both λ₁ and λ₂ light will emerge, with relatively small losses, at the ports 20, 21 connected to the semiconductor optical amplifiers 11 and 12. The ports 22 and 23 in principle receive no light, but may be used for monitoring correct operation.

In this preferred form of the invention, the output sides of the semiconductor optical amplifiers 11 and 12 are connected to two further unbalanced Mach Zehnder interferometers 24 and 25 which act as wavelength-selective wavelength-division demultiplexers and which are set and adjusted to direct light of wavelength λ₂ to the coupler 13 and light of wavelength λ₁ to ports 26 and 27 respectively. Interference occurs in the coupler 13 as described above, and so a regenerated data signal (D*) is established at port 14B and a counterpart signal at port 14A: outputs at ports 14A, 26 and 27 will normally be discarded, but may be used for monitoring.

Preferably at least the part of the device shown in Figure 2 (and preferably the delay) is implemented as a single integrated planar waveguide device, with adjustments made by varying the temperatures of the interferometers or of their separate branches, as necessary in the particular design. However, implementation in two or more chips, or partly in fibre, is not excluded.

To appreciate the advantage of the invention in relation to signal-to-noise ratio, first note that the amplifier (1 in Figure 1) will inevitably add noise in the form of amplified stimulated emission (ASE) to the data signal, and that the most deleterious ASE will be that which has a wavelength within about 40GHz around the wavelength λ₂, since that will be capable of beating with the output signal and so giving rise to signal-spontaneous noise, which is known to be the dominant noise term. Now consider the interferometer (multiplexer) 18 in Figure 2; the difference in length (and possibly temperature) between its limbs is chosen to ensure, *inter alia*, that light of wavelength λ₁ entering at 16 crosses over to exit at 20 but light of wavelength λ₂ does not cross over but also exits at 20 in order to achieve multiplexing. Considerations of symmetry indicate that if the input ports had been interchanged so that light of wavelength λ₂ entered at 16, it would not cross over to 20 but would emerge at 22. It follows that light, such as ASE noise, with a wavelength equal or sufficiently close to λ₂ entering with the data signal at 16 will not cross over to 20 but will be separated to emerge at 22: thus the regenerated signal is freed from a major source of noise.

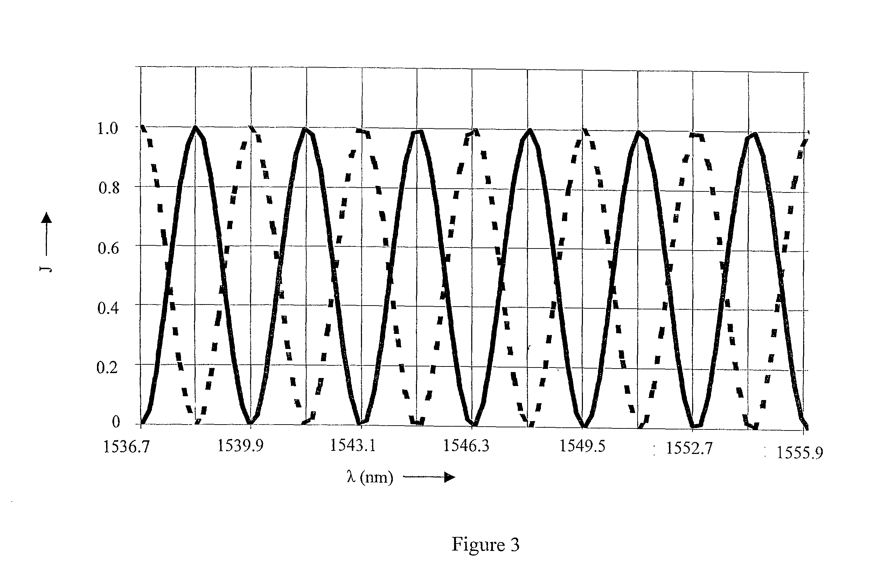

Furthermore, it is inherent in the nature of an interferometer to act as a "comb filter", transmitting to one port those wavelengths for which the phase shift is an odd multiple of n and to the other port those for which it is an even multiple. Figure 3 illustrates this for a particular unbalanced Mach Zehnder interferometer in a case in which the difference between λ₁ and λ₂ is 400Ghz. The graph plots optical intensity J at port A (solid line) and port B (broken line) in arbitrary units against optical wavelength λ in nm. It follows that noise will be attenuated not only in the λ₂ waveband but also in a series of wavebands around the values λ₂ ± 400n GHz. In the preferred form of Figure 2, this is not the limit of the benefit, for the same comb filter effect will occur in the interferometers 24 and 25 with optical wavelengths that differ by an odd multiple of 400 MHz - that is just those noise wavelengths that reached the semiconductor optical amplifiers - are rejected to output ports 26 and 27. Thus in the preferred form of the invention, amplifier noise is attenuated over the whole frequency range.

Note also that the peaks in Figure 3 are relatively broad, reducing any tendency to degrade signal by bandwidth limitation and allowing a useful tolerance in wavelength matching between of interferometers to the source of light at the "new" wavelength λ₂.

*Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so*.

## Claims

1. Apparatus for regeneration of optical signals comprising:
a source of light at a different optical wavelength from the intended input data signal;
at least one coupler for combining input data signal with said light;
a Mach Zehnder interferometer with a semiconductor optical amplifier in each of its limbs for receiving the combined signal;
a delay for producing a time difference in the arrival of incoming data pulses at the respective semiconductor optical amplifiers so that a pulse will be established at one of the outputs of the interferometer by alternate switching of the light at the said different optical wavelength on arrival of a data pulse at each of the semiconductor optical amplifiers in turn;
***characterised in that*** the said coupler, or each of them, is a wavelength-selective wavelength-division multiplexer.

2. Apparatus in accordance with claim 1 for "3R" regeneration including a clock pulse generator for generating optical clock pulses at the said different optical wavelength and a splitter for obtaining a fraction of the amplified data input signal and communicating it to the clock pulse generator for the purpose of synchronisation, the clock pulses being combined with input data signal (less the fraction used for clock synchronisation) by the wavelength-selective wavelength division multiplexer.

3. Apparatus in accordance with claim 2 in which the clock pulse generator is a modulator controlled by an electrical clock and acting on continuous wave light from a separate source.

4. Apparatus as claimed in any one of claims 1-3 comprising a further wavelength-selective wavelength-division multiplexer to separate the regenerated signal from residual light at the data input wavelength.

5. Apparatus as claimed in any one of claims 1-4 in which the wavelength-selective wavelength-division multiplexer, or if there is more than one, each of them, is of the unbalanced Mach Zehnder type.

6. A method of regenerating optical signals comprising providing light at a different optical wavelength from the input data signals;
combining input data signal with said light; and
using a Mach Zehnder interferometer with a semiconductor optical amplifier in each of its limbs and a delay for producing a time difference in the arrival of incoming data pulses at the respective semiconductor optical amplifiers to establish a pulse at one of the outputs of the interferometer by alternate switching of the light at the said different optical wavelength on arrival of a data pulse at each of the semiconductor optical amplifiers in turn;
***characterised* by** using a wavelength-selective wavelength division multiplexer to combine input data signal with light of a different optical wavelength.

7. A method in accordance with claim 6 for 3R regeneration comprising providing the said light in clock pulses.

8. A method as claimed in claim 6 or claim 7 comprising using a further wavelength-selective wavelength-division multiplexer to separate the regenerated signal from residual light at the data input wavelength.

9. A method as claimed in any one of claims 6-8 comprising using as wavelength-selective wavelength-division multiplexer one or more than one unbalanced Mach Zehnder interferometer.
